# EUROPÄISCHE PATENTANMELDUNG

(11) **EP 1 255 212 A1**
(43) Veröffentlichungstag der Anmeldung: **06.11.2002**
(21) Anmeldenummer: 01110885.9
(22) Anmeldetag: 04.05.2001
(51) Int. Cl.: G06F 17/60, G06F 1/00

(54) **Registrierung, Einladung und Anmeldung zu einem Projekt in einem internetgestützten System über das Internet**

(71) Anmelder: conject AG, 80469 München (DE)
(72) Erfinder: Wiesener, Stefan G. Dr., 80798 München (DE); Lambert, Monika, 80805 München (DE); Weiss, Frank, 80469 München (DE); Flores, Cesar, 81677 München (DE)

(57) **Zusammenfassung**

Es wird ein internetgestütztes System in einem Verfahren zur sicheren Registrierung, Einladung und Anmeldung von Teilnehmern zu einem Projekt über das Internet angegeben.

Die sichere Registrierung erfolgt für den Berechtigungsherausgeber (Projektinitiator) gleichermaßen wie für den Berechtigungsempfänger (Projektteilnehmer) in einem System bestehend aus einer Registrierungsstelle (PC, Webbrowser) und einer Registrierungseinheit (Datenbank, Server), wobei der Berechtigungsherausgeber und der Berechtigungsempfänger den Zugriffschlüssel zum System (Projektraum), bestehend aus Benutzernamen und Passwort neben ihren E-Mail-Adressen und weiteren personen- und firmenbezogenen Angaben bei der Registrierung selbst festlegen. Die Registrierungsdaten werden dabei in der Datenbank (Registrierungseinheit), die via Internet mit den Registrierungsstellen verbunden ist, in den individuellen Benutzer-IDs festgehalten. Bei der Anmeldung in den Projektraum werden die Personen über die Benutzer-ID vom System (Datenbank) identifiziert.

Der Berechtigungsherausgeber lädt durch die Eingabe von Namen und E-Mail-Adresse und/oder der Faxnummer, und/oder der SMS (PC, Webbrowser) bestimmte Personen zu einem, von ihm im Projektraum angelegten Projekt ein, und legt dabei die projektspezifischen Berechtigungen (Projektdatenzugriff/Funktionalitäten) der Personen fest. Alle projektspezifischen Daten werden inklusive der vom Projektinitiator vergebenen Daten der eingeladenen Personen in der Datenbank in einer individuellen Projekt-ID festgehalten. Die eingeladene Person bekommt im System den Status "eingeladen".

Die eingeladenen Personen (Berechtigungsempfänger) erhalten eine vom System generierte E-Mail und/oder ein Fax, und/oder eine SMS mit ihrem Namen und einem individuellen, projekt- und personenspezifischen Code an ihre vom Projektteilnehmer eingegebene E-Mail-Adresse/Faxnummer/Mobilnummer.

Nach der Anmeldung in das System mit dem bei der Registrierung selbst definierten Benutzernamen und Passwort geben die eingeladenen Personen den Projektcode in ein dazu vorbestimmtes Feld ein und sind damit zum Projekt angemeldet. Die Verifikationseinheit (Datenbank, Server) vergleicht bei der Projektcodeeingabe den eingegebenen Code mit dem bei der Einladung durch den Berechtigungsherausgeber (Projektinitiator) vom System generierten und via E-Mail und/oder Fax, und/oder SMS an den Berechtigungsempfänger gesendeten Projektcode. Sind beide identisch, so wird die Projektanmeldung von der Verifikationseinheit als erfolgreich markiert, der Code wird ungültig und in der Projekt ID bekommt die eingeladene Person den Status "angemeldet". Diese Projektinformation kann vom Berechtigungsherausgeber (Projektinitiator) im System (Projektraum) unter dem Projekt eingesehen werden.

## Beschreibung

Die Erfindung betrifft ein System und ein Verfahren zur sicheren Identifikation und Anmeldung von Teilnehmern zu einem Projekt in einem internetgestütztem System über das Internet. Die einzelnen Teilnehmer werden dabei vom Administrator des Projektes mittels einer vom System automatisch generierten E-Mail und/oder einem Fax und oder einer SMS mit einem personenbezogenen individuellen Code zum Projekt eingeladen, sich zu registrieren und mit Hilfe des Codes anzumelden. Der Administrator vergibt bei der Einladung jedem User personenbezogene Berechtigungen, die nach der Anmeldung vom System registriert und projektspezifisch umgesetzt werden.

Die Rahmenbedingungen für die eindeutige Identifikation und Anmeldung von Personen über das Internet inklusive der Ausgabe von Zeitstempeln und Zertifikaten sind durch das Gesetz zur digitalen Signatur (Signaturgesetz) geregelt. Es besteht demnach ein Bedarf an gesetzeskonformen Einrichtungen, Systemen und Verfahren zur sicheren Identifikation und Anmeldung von Personen, sodass gewährleistet ist, dass systemspezifische (bzw. projektspezifische) Berechtigungen nur an sicher identifizierte Personen herausgegeben werden. Da bei Ausgabe von projektspezifischen Berechtigungen an eine unberechtigte Person Haftungsfragen für den Trust Center (Berechtigungsherausgeber) auftreten, besteht der Bedarf für ein sicheres Ausgabeverfahren und -system. Die gesetzlichen Bestimmungen allein geben diese Sicherheit noch nicht.

Die WO-A 98/28 721 beschreibt ein Gerät, welches Personendaten mit einem Ausweisleser erfasst und zur Ausgabe von weiteren personenbezogenen Daten verarbeitet. Die Sicherstellung, dass die erfassten Personendaten tatsächlich die Personendaten der anwesenden Person sind, ist jedoch hierbei nicht gewährleistet. Es könnte zudem ein amtlicher Ausweis gelesen werden, der nicht zu der anwesenden Person gehört. Zudem erfordert dieses Verfahren die Präsenz der zu registrierenden Personen und kann nicht rein über das Internet erfolgen.

Die bestehenden Anmelde- und Registrierungsverfahren des "Internetbanking" funktionieren über eine User-spezifische Passwortvergabe durch den Systemadministrator der Bank. Der Kunde gibt seinen gewünschten Usernamen per Post oder E-Mail an die Bank weiter. Er erhält von der Bank ein Schreiben und bekommt bei der Post gegen Vorlage seines Personalausweises das Passwort und seinen Usernamen. Hierbei besteht jedoch ebenfalls die Möglichkeit, dass die Post nach dem Vorzeigen eines amtlichen Ausweises, der nicht zur anwesenden Person gehört oder gestohlen wurde, das Passwort und Usernamen an eine unberechtigte Person vergibt. Zudem ist dieser Prozess mit einem nicht unerheblichen zeitlichen Aufwand und einer gewissen Ortsgebundenheit (Nähe der Post) des Benutzers verbunden.

Es ist die Aufgabe vorliegender Erfindung ein System sowie ein einfaches, kostengünstiges und zeitsparendes Verfahren zur sicheren Identifikation, Registrierung und Anmeldung von Personen, insbesondere für die Herausgabe von bestimmten Rechten auf Projekte (Daten) anzugeben, bei dem gewährleistet ist, dass die Freigabe der Berechtigungen sicher nur an eine eindeutig identifizierte Person erteilt wird. Eine weitere Aufgabe der vorliegenden Erfindung ist die Bereitstellung eines für das System geeigneten, sicheren internetbasierten Registrierverfahrens.
Die Lösung dieser Aufgabe erfolgt durch die Merkmale der Ansprüche.

Das vorliegende internetgestützte System ist ein Collaborationtool mit einem integrierten Dokumenten-Management System (Projektraum). Es dient u.a. der Projektabwicklung im Bauwesen über das Internet und basiert auf einer Client-Server Architektur. Der Server wird z.B. vom Anbieter des Systems gehostet und gepflegt. Die einzelnen Clienten melden sich mit Benutzernamen und Passwort über das Internet im System an.
Zur Nutzung des Systems bzw. der damit verbundenen Software benötigt der Benutzer einen PC mit einem Internetanschluss und einem Webbrowser sowie die Internetadresse der Homepage des Anbieters. Die Nachrichtenübermittlung und der Zugriff zu dem System sind verschlüsselt.
Die Beschreibung zur Ausführung der Erfindung wird im Folgenden anhand des Beispiels der Anlage eines Projektes, der Einladung einer Person zu diesem Projekt durch den Projektinitiator und der Anmeldung der Benutzer zu dem Projekt dargestellt.

Um ein Projekt über das System abzuwickeln, registriert sich der Projektinitiator in einem ersten Schritt via Internet über die Homepage der anbietenden Firma und legt dabei neben einer Reihe von personen- und firmenspezifischen Daten sowie seiner E-Mail Adresse seinen Benutzernamen und sein mehrstelliges Passwort selbst fest. Diese Daten werden in der Datenbank des zentralen Servers des Anbieters unter einer vom System vergebenen Benutzer ID gespeichert.
Im nächsten Schritt meldet sich der registrierte Benutzer mit seinem Benutzernamen und Passwort auf der Homepage des Anbieters im System an. Im System legt er ein neues Projekt an und wird damit zum Projektinitiator. Dabei gibt er neben zahlreichen Projektdaten den Namen des Projektes an. In dem neuen Projekt kann der Projektteilnehmer zahlreiche Dokumente bzw. Daten einstellen. Das Projekt wird inklusive aller Projektdaten und Dokumente in der Datenbank des Servers unter einer vom System vergebenen und mit dem Namen des Projektes verknüpften Projekt ID gespeichert.
In einem weiteren Schritt lädt er einzelne Personen zu dem Projekt ein:
Dabei gibt er den Namen der Person und deren E-Mail-Adresse sowie evtl. deren Faxnummer ein und vergibt Ihr bestimmte Rechte auf das Projekt bzw. die von ihm eingestellten Daten/Dokumente des Projektes. Die eingeladenen Personen erscheinen im System in einer für den Projektinitiator aufrufbaren Liste und bekommen den Status "eingeladen". Die Daten der eingeladenen Personen werden in der Datenbank des Systems unter der bestehenden Projekt ID gespeichert. Nach Abschluss der Einladung generiert das System ad-hoc eine E-Mail und/oder ein Fax und/oder eine SMS an die E-Mail-Adresse bzw. Faxnummer bzw. Mobilnummer der eingeladenen Person. Diese E-Mail bzw. dieses Fax und oder diese SMS enthält den Namen der eingeladenen Person, den Namen des Projektes und einen projektspezifischen mehrstelligen Code. Dieser Code wird beim Versenden der E-Mail für jede eingeladene Person individuell vom System generiert.
Die eingeladene Person muss sich zunächst registrieren, um sich im System (Projektraum) anmelden zu können und dann über den Projektcode Zugriff auf das Projekt und die darin enthaltenen Daten zu erlangen.
Die Registrierung erfolgt über die Homepage des Anbieters. Dort gibt die eingeladene Person neben personen- und firmenspezifischen Angaben unter anderem ihre E-Mail Adresse, ihren frei wählbaren Benutzernamen (sofern er nicht schon an einen anderen Benutzer vergeben wurde) sowie ein mehrstelliges Passwort ein. Damit legt jede Person ihren Zugriffsschlüssel für das System (Projektraum) selbst fest. Die Gefahr des Zugriffs dritter Personen unter dem selben Benutzernamen ist damit praktisch ausgeschlossen, sofern die dritte Person Benutzernamen und Passwort nicht persönlich von der registrierten Person erhält. Die Gefahr des Zugriffsmissbrauchs durch Dritte (Administratoren) bzw. die unrechtmäßige Erlangung des Zugriffsschlüssels weiterer Personen während des Postversandes ist hier nicht gegeben.
Die Datenbank des Systems speichert die Registrierungsdaten und Zugriffsschlüssel der Person unter einer vom System generierten Benutzer-ID.
Bei der Anmeldung der eingeladenen Person mit dem selbstvergebenen Zugriffsschlüssel in das System erkennt das System anhand des Benutzernamens und Passwortes die ID der Person (Benutzer). Der Benutzer ist nun im System, hat jedoch noch keinen Zugriff auf das dort angelegte Projekt.
Zur Anmeldung zum Projekt gibt der Benutzer in einem dafür vorgesehenen Feld den ihm durch die Einladungs-E-Mail/Fax/SMS mitgeteilten, vom System generierten Code ein. Das System überprüft, ob der eingegebene Code dem in der E-Mail/Fax/SMS gesandten Code (unter Projekt ID gespeichert) entspricht. Ist diese Bedingung eingehalten, so erhält die Person Zugang zu dem Projekt. Der Projektcode kann nur einmal eingegeben werden und verfällt nach der erfolgreichen Anmeldung.
Der Status des Projektteilnehmers in der für den Projektinitiator sichtbaren Projektteilnehmerliste verändert sich auf "angemeldet". Der Projektteilnehmer bekommt zusätzlich die Bestätigung über die Anmeldung der Person zum Projekt. (Der Projektinitiator kann jeden Projektteilnehmer auch vom Projekt ausladen).

Wie im obigen Beispiel erörtert, erfolgt der Zugang zu einem Projekt im System in zwei voneinander unabhängigen Prozeduren, wodurch die Sicherheit der Übertragung von Berechtigungen auf ein bestimmtes Projekt gewährleistet ist:
1. Der Berechtigungsherausgeber (Projektinitiator/Projektadministrator) lädt eine Person im System zum Projekt ein und gibt ihm bestimmte Rechte auf das Projekt. Der Berechtigte erhält via E-Mail oder Fax den Zugriffscode zu dem Projekt.
2. Vorraussetzung für die Anmeldung zu einem Projekt ist die Erlangung des Zugangs zum System (Projektraum) über die erfolgreiche Registrierung. Den Zugang zu dem System (Projektraum) legt der Berechtigte selbst bei der Registrierung fest.

Das erfindungsgemäße Verfahren ist wirtschaftlicher als bestehende rein manuelle Verfahren der Registrierung und Anmeldung in ein System bzw. ein Projekt. Die vorwiegend manuellen und papiergestützten Verfahren sind personal- und zeitintensiv und deshalb teuer. Dazu kommen Medienbrüche, die teilweise Doppelarbeit, immer aber Fehlerquellen darstellen. Die Kosten für die Qualitätssicherung sind deshalb hoch. Die Überlegenheit gründet auf den verkürzten Bearbeitungszeiten bei der Registrierung und den Berechtigungsherausgebern.
Das erfindungsgemäße Registrierungs- und Anmeldeverfahren in ein Projekt in einem System über das Internet hat folgende Vorteile gegenüber bestehenden Systemen:
- Der Anmeldungsprozess und die Kommunikation erfolgen über das Internet bzw. E-Mail oder Fax; der Benutzer benötigt nur einen Internetzugang und ist nicht darauf angewiesen, dass entsprechende Registrierorte (Post) in der Nähe sind. In diesem Zusammenhang ist die Bequemlichkeit der Registrierung im Vergleich zu anderen Verfahren ein weiterer Vorteil.
- Der Registrierungs- und Anmeldungsprozess kann zu jedem beliebigen Zeitpunkt gestartet werden, sobald der Projektinitiator den Berechtigten eingeladen hat und dauert max. 15 Minuten. Herkömmliche Registrierungs- und Anmeldungsprozesse wie zum Beispiel das Internetbanking dauern zumindest 24 Stunden und sind nicht ad hoc durchführbar.
- Das Sicherheitsrisiko eines unberechtigten Zugriffs auf ein Projekt ist gering, da sich der Berechtigte seinen Benutzernamen und sein Passwort selbst vergibt und den Zugriffsschlüssel nicht wie bei bestehenden Systemen vom Administrator (Projektinitiator) via E-Mail oder Post gesandt bekommt.
- Eine erhöhte Wirtschaftlichkeit.

## Patentansprüche

1. System zur sicheren Registrierung, Einladung und Anmeldung von Teilnehmern zu einem Projekt in einem internetgestützten System über das Internet mit
• einem Datenbanksystem mit einer Datenbank, die über einen Server und entsprechende Software mit dem Internet (WAN) verbunden ist und
• auf die der Berechtigungsherausgeber und Berechtigungsempfänger (eingeladene Person) als sogenannte Clients über das Internet (Webbrowser) benutzerspezifischen Zugriff haben,
• wobei der PC (Webbrowser) des Berechtigungsherausgebers und des Berechtigungsempfängers die Registrierungsstellen, Eingabe- und Ausgabemittel sind und die Datenbank mit Unterstützung der Software als Registrierungsseinrichtung fungiert, in der alle personenbezogenen Registrierungsdaten inklusive der Benutzernamen und Passwörter sowie E-Mail-Adressen in einem personenspezifischen Benutzer ID gespeichert werden,
• wobei sich der Berechtigungsempfänger und der Berechtigungsherausgeber zuvor mit Unterstützung eines Webbrowsers bei dem Softwaresystem registrieren, dabei ihren Benutzernamen und ihr Passwort definieren sowie ihre E-Mail-Adresse und andere Daten angeben, die über das Internet und den Server zur Systemdatenbank gelangen und dort im individuellen Benutzer ID gespeichert werden, bevor sie sich in dem System (Projektraum) anmelden und beschränkten Zugriff auf fremde Projektdaten sowie vollen Zugriff auf eigene Projektdaten und auf die von der Datenbank unterstützten Funktionen des Softwaresystems die die Projektarbeit betreffen, haben,
• wobei der Berechtigungsherausgeber dem Berechtigungsempfänger zu seinem eigenen Projekt im Projektraum mit Angabe seines Namens und seiner E-Mail-Adresse sowie evtl. seiner Faxnummer einlädt, ihm dabei bestimmte Rechte auf das Projekt und die darin enthaltenen Daten erteilt und diese Daten über das Internet und den Server zur Systemdatenbank gelangen,
• wobei alle projektspezifischen Daten inklusive der Daten der eingeladenen Personen (E-Mail-Adresse) in der Datenbank unter einer projektspezifischen Projekt ID gespeichert werden,
• wobei das System (Datenbank, Server) bei der Einladung als Steuereinheit fungiert, automatisch eine E-Mail und/oder ein Fax, und/oder eine SMS mit einem projektspezifischen und personenspezifischen Code generiert und an den Berechtigungsempfänger sendet,
• wobei der Berechtigungsempfänger beim Anmelden zu dem Projekt des Berechtigungsherausgebers sich zunächst mit seinem selbstvergebenen Benutzernamen und Passwort in das System (Projektraum) anmeldet bevor er im Projektraum durch Eingabe des ihm per E-Mail/Fax/SMS zugesandten individuellen Projektraumcodes Zugang zu dem Projekt erhält,
• wobei bei der Eingabe des Projektcodes über den Vergleich mit dem vom System generierten Projektcodes, den der Berechtigungungsempfänger via E-Mail und/oder Fax, und/oder SMS bei der Einladung durch den Berechtigungsherausgeber erhalten hat, der Berechtigungsempfänger identifiziert und verifiziert wird, wobei die Datenbank des Systems als Identifikationseinheit (Benutzer ID, Projekt ID) und als Verifikationseinheit (Benutzer-ID, Projekt-ID) fungiert,
• wobei der Projektraumcode nach erfolgreicher Eingabe ungültig wird.

2. System nach Anspruch 1 **gekennzeichnet durch** den projektspezifischen Berechtigungsherausgeber, der über das Steuerelement (Datenbank, Software) von seinem PC mit Hilfe eines Webbrowsers im Projekt die Möglichkeit hat, den Status der Einladung und Anmeldung des Berechtigungsempfängers ("eingeladen", "angemeldet") einzusehen und zu steuern.

3. System nach Anspruch 1 oder 2 **dadurch gekennzeichnet, dass** dadurch im EDV-System der Berechtigungsherausgeber über das Eingabesystem die Berechtigungen auf sein im Projektraum eingerichtetes Projekt an den Berechtigungsempfänger über den projektspezifischen Code vergibt und der Berechtigungsempfänger den Zugriffsschlüssel zum System (Projektraum) über die individuelle Benutzernamen- und Passwortvergabe selbst bestimmt, die Zugriffsschlüssel auf ein Projekt im Projektraum auf zwei virtuell getrennten unabhängigen Wegen erfolgt.
